# EUROPEAN PATENT SPECIFICATION

(11) **EP 2 814 659 B1**
(45) Date of publication and mention of the grant of the patent: **27.09.2017**
(21) Application number: 13706140.4
(22) Date of filing: 12.02.2013
(51) Int. Cl.: B29C 49/48, B29C 49/08, B29C 49/06

(54) **PROCESS FOR MAKING A STRETCH-BLOW MOLDED CONTAINER HAVING AN INTEGRAL HANDLE**
VERFAHREN ZUR HERSTELLUNG EINES STRECKBLASGEFORMTEN BEHÄLTERS MIT EINEM INTEGRIERTEN GRIFF
PROCÉDÉ DE FABRICATION D'UN RÉCIPIENT MOULÉ PAR SOUFFLAGE BI-ORIENTÉ POSSÉDANT UNE POIGNÉE INTÉGRÉE

(30) Priority: 13.02.2012 US 201213371987
(43) Date of publication of application: 24.12.2014
(73) Proprietor: The Procter & Gamble Company, Cincinnati, OH 45202 (US)
(72) Inventor: GERLACH, Christian, Gerhard Friedrich, B-1060 St. Gilles Brussels (BE)
(74) Representative: Siddiquee, Sanaul Kabir
(86) International application number: PCT/US2013/025730
(87) International publication number: WO 2013/122928

(56) References cited:
- EP-A1- 2 103 413
- JP-A- 2007 153 366
- US-A- 4 123 217

## Description

### FIELD OF INVENTION

A process for making a stretch-blow molded container having an integral handle.

### BACKGROUND OF THE INVENTION

Integral handles formed using a stretch blow molding process can be advantageous. An integrally molded handle can be generally less expensive than a separate handle, such as a clip-on handle. Approaches for providing an integral handle typically require the formation of a pair of opposing depressions or cavities in the body of the bottle that form the structural basis of the handle. These depressions can either then be welded together and the central section, encompassed by the weld, can be removed such as to form a completely open space through which the fingers and/or thumb can be inserted (a 'through' handle), or, alternatively, left to simply form a grip. If the grip is formed sufficiently wide and deep so that a hand can close on the grip without having the tip of the fingers touch the bottom of the recess, then the grip may be ergonomically acceptable to a degree comparable to a through handle. @

One of the problems associated with available approaches for providing an integral handle is that the distribution of material in these depressions can be uneven. This can occur as a result of the differing degrees of stretch needed to deform the preform into different sections of the depressions of the handle of the container. The differing degrees of stretch can result in irregular wall thicknesses and irregular mechanical and aesthetic properties.

One approach to forming an integral handle requires using moving sections of the mold to compress the expanding preform and form the deep depressions during the blowing process. This process can result in two problems. First, this process requires significant levels of stretching of the material after the material contacts the mold. This can result in highly irregular wall thicknesses in the handle area and failure of the material under stress. Second, the complexity that is required to move mold sections against the high blowing pressure, for example more than 20 bars, required to blow mold a container requires mechanically complicated and expensive mold designs.

An alternative approach is to produce an intermediate container with a convex section which can be mechanically deformed inwardly about one or more articulation zones to form the concave grip section. This process allows for more even stretch ratios and hence more even wall thicknesses. However, the inversion of the convex section can result in significant deformation of the area around the handle which can create aesthetic defects. These defects can be difficult to control, as the exact nature of the deformation around the handle will be highly dependent on very small variations in wall thickness. Using multiple articulation zones to minimize the problem of providing for a clean inversion of the grip geometry from convex to concave can result in a restrictive design geometry and may not eliminate residual stresses in the plastic sheets forming the grip resulting in undesirable wrinkles and poor ergonomics.

US4123217 discloses a blow-molding apparatus for producing containers containing punches for compressing the plastic material in the region of the handles and a knock-out mechanism to form the opening.

EP2103413 discloses a process for making a container including deforming convex bubbles by means of an inwardly moving plug. 1 EP 2 103 413 discloses a process for making a container having an integral handle, comprising the steps of:
a) providing a preform;
b) stretch blow molding said preform to form an intermediate container which comprises a convex portion extending outwardly from said intermediate container, said convex portion having a glass transition temperature;
c) at a pressure within said intermediate container above about 1 bar, inverting said convex portion with an inwardly moving plug having a drive direction to form a concave gripping region whereby locations on said convex portion translate in a substantially straight line path as said convex portion is inverted; and
d) releasing excess pressure within the container; wherein said plug has a contact surface having a contact surface area, said contact surface comprised of an initial contact surface and a secondary contact surface proximal said initial contact surface, said the secondary contact surface [being] oblique to the drive direction; wherein said contact surface has a contact surface periphery having a projected plane area; wherein said contact surface area is greater than said projected plane area; wherein said contact surface is substantially convex relative to said contact surface periphery; wherein said contact surface substantially corresponds with said concave gripping region.

It is an object of the present invention to provide a process to create a deep, concave grip which provides an ergonomic handle.

### SUMMARY OF THE INVENTION

A process for making a container having an integral handle, comprising the steps of: a) providing a preform (6); b) stretch blow molding said preform (6) to form an intermediate container (8) which comprises a convex portion (9) extending outwardly from said intermediate container, said convex portion (9) having a glass transition temperature; c) at a pressure within said intermediate container (8) above about 1 bar and with the temperature of said convex portion (9) being below said glass transition temperature, inverting said convex portion (9) with an inwardly moving plug (5) having a drive direction to form a concave gripping region whereby locations on said convex portion translate in a substantially straight line path as said convex portion is inverted; and
d) releasing excess pressure within the container; wherein said plug has a contact surface having a contact surface area, said contact surface comprised of an initial contact surface and a secondary contact surface proximal said initial contact surface, said secondary contact surface oblique to said drive direction; wherein said contact surface has a contact surface periphery having a projected plane area; wherein said contact surface area is greater than said projected plane area; wherein said contact surface is substantially convex relative to said contact surface periphery; and wherein said contact surface substantially corresponds with said concave gripping region.

### BRIEF DESCRIPTION OF THE DRAWINGS

Figure 1 is a mold cavity.
Figure 2 is an intermediate container having a convex portion.
Figure 3 is a conforming mold.
Figure 4 is a finished container.
Figure 5 is a side view of a plug.
Figure 6 is a perspective view of a plug.
Figure 7A is a convex portion.
Figure 7B illustrates a plug in contact with the convex portion shown in Figure 7A.
Figure 7C illustrates the plug inverting the convex portion as the plug is moved in the drive direction as compared to Figure 7B and the convex portion is partially inverted upon itself.
Figure 7D illustrates the plug inverting the convex portion as the plug is moved in the drive direction and the convex portion is further inverted upon itself as compared to Figure 7C.
Figure 7E illustrates the convex portion in Figure 7A having been fully inverted upon itself to form the grip.
Figure 8 is a perspective view of a finished container having an integral handle.
Figure 9 is an illustration of the grip diameter, d, defined as the minimum diameter of the circle made by the thumb and finger when enclosing a cone (in accordance with DIN 33402).

### DETAILED DESCRIPTION OF THE INVENTION

By stretch-blow molding, what is meant herein is the process in which a preform is heated above its glass transition temperature, and then blown in a mold using high pressure air to form a hollow body, such as a container or bottle. The preform can be stretched with a core rod as part of the process.

By preform what is meant herein is a molded form which is produced prior to expansion to form the finished object. A preform is necessarily somewhat smaller than the finished object. A preform is generally produced by, for example injection molding, at an elevated temperature in excess of the melt temperature.

As used herein, oblique means not parallel.

Thermoforming is one of many manufacturing processes for converting plastic resin into usable products. The basic concept of thermoforming is as follows. A pre manufactured thermoplastic sheet is heated until it becomes soft and pliable. The sheet can be, for example, a flat structure or container perform. It is then forced against the contours of a mold until it cools to its original state. Once it has cooled it is removed from the mold while still maintaining the shape of the mold. Thermoforming is a broad term and there are many different types of thermoforming processes. For deep thermoforming, bubble plug-assist forming can be employed. An advantage to this forming technique is that it improves material distribution because of its pre-stretching procedure. By this process, it is possible to control the thickness of the formed article as the sheet is stretched to ensure an even thickness of walls. Once the sheet has been placed in the frame and heated, controlled air pressure creates a bubble. This bubble stretches the material to a predetermined level. The male plug assist is then lowered forcing the stretched stock down into the cavity. The male plug is normally heated to avoid chilling the plastics prematurely. The plug is made as large as possible so the plastic is stretched close to the final shape of the finished product. The female mold can be vented to allow trapped air to escape from between the plastics and the mold.

Thermoforming can take place in two dimensions, whereby a surface is deformed, or in three dimensions where, in addition to two dimensional deformation, a change of the thickness occurs.

The bubble plug-assist thermoforming technique can be used to address the problems of forming a deep grip on a stretch blow molded container.

The term deep grip is used herein to denote a blind handle which is a gripping feature which permits the user's thumb and fingers to wrap around a handle, but which does not allow the fingers to pass completely behind and through the handle. A through-type of handle can be achieved by cutting away part or all of the web of material which is formed between the handle and the body of the container.

Plastic resin materials that can be used to form an integral handle can include thermoplastic materials. Plastic resin materials that can be used to form an integral handle include common polyesters such as polyethylene terephthalate (PET). Other materials suitable for use in a container having an integral handle include polypropylene (PP), polyethylene (PE), polystyrene (PS), polyvinyl chloride (PVC) and polylactic acid (PLA).

The temperature history of the polymer employed can be an important factor in the deformation behavior. The glass transition temperature is defined as the temperature below which the polymer behaves like a brittle, glassy solid and above which the polymer behaves like a rubber and is easily deformable. The melt temperature is the temperature at which all crystallites are melted and the polymer is behaving as a fluid. The re-crystallization temperature for semi-crystalline polymers, Tc, is the temperature at which an un-oriented polymer when cooled down from the melt is showing significant crystal growth within a specific period of time, typically a few minutes. Glass transition temperature and melt temperature are measured following ASTM D3418.

**Table 1. Glass transition temperature, Tg, recrystallization temperature, T_{c}, and melt temperature, Tₘ, for particular polymers.**

| Typical Temperatures | PET | PP | PS |
|---|---|---|---|
| Glass transition temperature, T_{g} | 81°C | -10°C | 82°C |
| Recrystallization temperature, T_{c} (for time < 1min) | 90°C | 110°C | Not applicable (fully amorphous) |
| Melt temperature, Tₘ | 265°C | 170°C | 240°C |

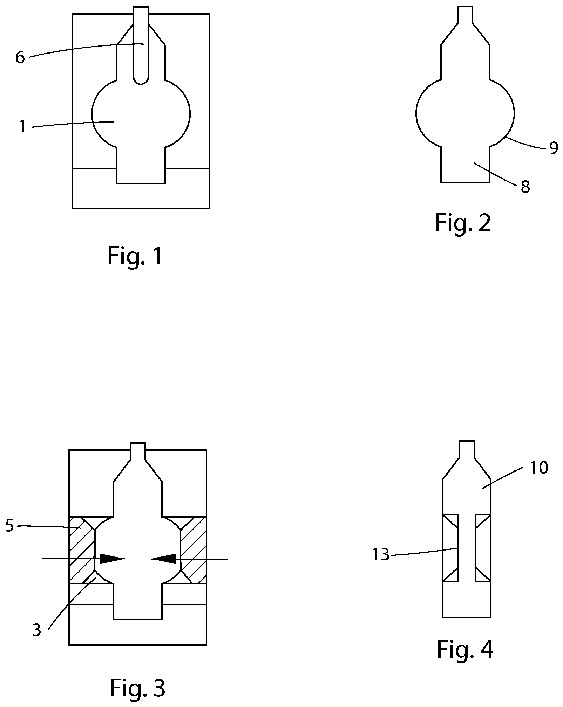

Figures 1-4 illustrate the process for making a container having an integral handle. First a perform 6 is provided, as shown in Figure 1.

Next, the perform 6 is stretch blow molded in a mold cavity 1 to form an intermediate container 8 which comprises a convex portion 9 extending outwardly from the intermediate container 8, as shown in Figure 2. Typically, the stretch blow molding process is performed at a temperature greater than the glass transition temperature, Tg. The convex portion 9 can be a convex bubble.

Next, as shown in Figure 3, at a pressure within the intermediate container 8 above about 1 bar, the convex portion 9 is inverted with an inwardly moving plug 5 having a drive direction, indicated by the arrow associated with each plug 5, to form a concave gripping region whereby locations on the convex portion 9 translate in a substantially straight line path as the convex portion 9 is inverted from the convex position to the concave position. The convex portion 9 can be inverted in the mold cavity 1 if the mold cavity 1 is provided with moveable plug 5 or plugs 5 to invert the convex portion 9. The convex portion 9 can be inverted in a separate conforming mold 3 that is provided with moveable plug 5 or plugs 5 to invert the convex portion 9.

After the inverting step is complete, the excess pressure in the finished container 10 is released. The finished container is released from the mold in which the inverting step is performed, with the finished container 10 having a deep gripping region 13 shown in Figure 4.

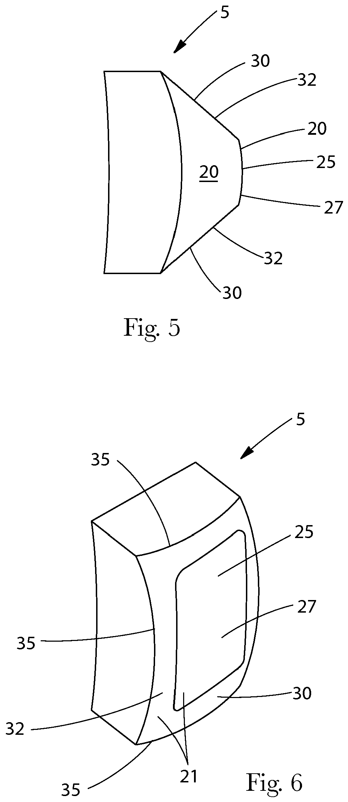

A side view of a schematic of a plug 5 is shown in Figure 5 and an accompanying perspective view of the plug 5 shown in Figure 5 is shown in Figure 6. The inwardly moving plug 5 can have a contact surface 20 having a contact surface area 21. The contact surface 20 is the portion of the plug 5 that comes into contact with the convex portion 9 as the convex portion 9 is inverted.

The contact surface 20 can be comprised of an initial contact surface 25 and a secondary contact surface 30 proximal the initial contact surface 25 and oblique to the drive direction of the plug 5. The secondary contact surface 30 has a secondary contact surface area 32. The initial contact surface 25 can have an initial contact surface area 27. The secondary contact surface 30 can be abutting, or adjacent to, or proximal the initial contact surface 25. The secondary contact surface 30 can be separated from the initial contact surface 25 by one or more concave portions of the plug 5 and still be considered proximal the initial contact surface 25 if the surface area of the concave portion is less than the initial contact surface area 27.

The drive direction can be a straight line. The initial contact surface 25 of the plug 5 is the part of the plug 5 that that first comes into contact with the convex portion 9 as the plug 5 is moved in the drive direction. The secondary contact surface 30 of the plug 5 comes into contact with the convex portion 9 after the initial contact surface 25 has contacted the convex portion 9. By having the secondary contact surface 30 come into contact with the convex portion 9 after the initial contact surface 25 has contacted the convex portion 9, locations on the convex portion 9 are translated in a substantially straight line path as the convex portion 9 is inverted upon itself. Furthermore, it is thought that having the secondary contact surface 30 oblique to the drive direction can also be desirable because it can allow the final container 10 to be easily separated from the plug 5 when the final container 10 is ejected from the mold in which the inverting step is performed. Without being bound by theory, it is thought that the shear resistance along the sides of the plug 5 can resist the force applied to the final container 10 to eject the final container 10 and thereby prevent or hinder ejection.

The contact surface 20 can have a contact surface periphery 35. The contact surface periphery 35 is defined by the maximum extent of the plug 5 that comes into contact with the convex portion 9 as the convex portion 9 is inverted. If, by way of non-limiting example, the plug 5 has only an initial contact surface 25 and a secondary contact surface 30, the contact surface periphery 35 would bound the portion of the plug 5 containing the initial contact surface 25 and the secondary contact surface 30.

The contact surface periphery 35 has a projected plane area that is the planar area of the contact surface 20 projected in a direction aligned with drive direction of the plug 5. The contact surface area 21 is greater than the projected plane area. One possible geometry for the contact surface 20 is that of a conical frustum, which is a frustum created by slicing off a cone with a cut made parallel to the base. If the contact surface 20 has the shape of a conical frustum and the drive direction of the plug 5 is aligned with the radial axis of the conical frustum, the projected plane area of the contact surface periphery is a circle having the radius of the base of the conical frustum. The initial contact surface 25 would be the area of the top of the conical frustum and the secondary contact surface 30 would be the slanted surface of the conical frustum. The initial contact surface area 27 would be the area of the top of the conical frustum. The secondary contact surface area 32 would be pi times the slant height times the sum of the radius of the top of the conical frustum and the radius of the bottom of the conical frustum. The combined initial contact surface area 27 and the secondary contact surface area 32 for a plug 5 that is a conical frustum is greater than the projected plane area of the conical frustum.

The contact surface 20 can be substantially convex relative to the contact surface periphery 25. That is, the plug 5 can be like a finger that pushes in the convex portion 9 to invert the convex portion 9. The contact surface 20 can substantially correspond with the concave gripping region 13 formed by inverting the convex portion 9. The contact surface 20 can completely correspond with the concave gripping region 13 formed by inverting the convex portion 9. Without being bound by theory, it is believed that by having the contact surface 20 be a mirror image of the shape of the grip in the finished container 10, undesirable wrinkling and folding does not occur as the convex portion 9 is inverted. Undesirable wrinkling and folding can have adverse impacts on the aesthetics and performance of the finished container 10.

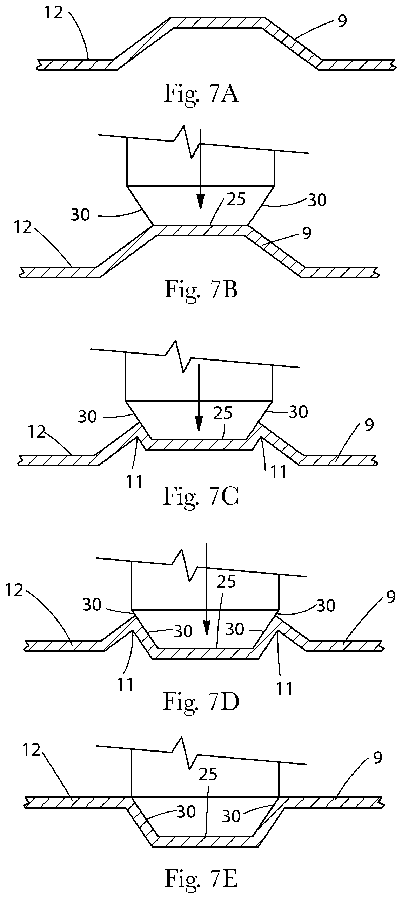

A schematic of how the plug 5 can invert the convex portion 9 is shown in Figures 7A through 7E. In Fig. 7A, a cross section of a portion of a convex portion 9 is shown and rendered in cross section. The convex portion 9 can be entirely curvilinear, comprised a planar sections, or be a combination of curved and planar sections. In Fig. 7B, the initial contact surface 25 of the plug 5 is contacted to the convex portion 9. As the plug 5 moves inwardly in the drive direction, the convex portion 9 begins to invert upon itself, as shown in FIG. 7C. As the convex portion 9 is inverted, the location of inversion 11 advances from the location of the convex portion 9 that is in contact with the initial contact surface 25 of the plug 5 outwardly as a wave towards what will ultimately be part of the main body 12 of the finished container 10, as shown in FIGS. 7B, 7C, and 7D, and no or little lateral movement of the material forming the convex portion 9 occurs in a direction orthogonal to the drive direction of the plug 5. That is, for a particular location mapped on the convex portion 9, that particular location moves in a substantially straight line that is substantially parallel to the drive direction. In one non-limiting embodiment, a particular location mapped on the convex portion 9 can be considered to move in a substantially straight line that is substantially parallel to the drive direction provided that the particular location mapped on the convex portion 9 travels within a variation of less than or equal to about 10°, or less than or equal to about 5°, or less than or equal to about 3° of as measured from the initial location of the particular location mapped on the convex portion 9 off of a line coincident with the drive direction in the direction of the drive direction.

The process of the present invention can be understood with reference to Figures 1-4 showing in diagrammatic form, the steps of:
a) providing a preform 6, Fig. 1;
b) stretch blow molding the preform 6 in a mold cavity 1 to form an intermediate container 8 which comprises at least one, possibly at least two, convex potion(s) 9, Fig, 2; optionally transferring the intermediate container 8 into a separate, conforming mold 3, and optionally reheating the intermediate container, Fig. 3;
c) deforming the or each convex portion 9 with an inwardly moving plug(s) 5 to form one or more concave gripping region(s), while maintaining the pressure within the intermediate container 8 above 1 bar and while the temperature of the material in the gripping region of the intermediate container is at a temperature below the glass transition temperature, Tg, Fig. 3;
d) releasing excess pressure within the container, (the release of pressure can be prior to withdrawing the plug 5 from within the container to help preserve the shape of the gripping region 13); and
e) ejecting the finished container 10 from the mold in which the convex portion(s) is/are inverted in (the mold cavity 1 or conforming mold 3), Fig. 4.

The step shown in Fig. 1 can be done via injection stretch blow molding or reheat stretch blow molding, where in the latter approach, injection and stretch blow molding is done on two separate machines.

The step shown in Fig 3 shows the option of providing a conforming mold 3 separately from the mold cavity 1 in which blow molding is conducted. The intermediate container 8 may be re-heated during this transfer if the convex portion 9 has cooled down too much during or after the blowing step and/or the transfer to the conforming mold 3.

In a variation, the convex portion 9 can be inverted in the mold cavity 1 if the mold cavity 1 is provided with a movable plug 5 or plugs 5 to invert the convex portion 9 in the same mold in which the intermediate container 8 is formed. Such an approach can have the advantage that the time between blow molding and inverting the convex portion(s) 9 is minimized and that the tolerances on the container specifically around the convex portions(s) 9 are tighter as there is no relative movement of the container versus the plug. The integration in one cavity complicates the construction of the blow mold as the blow mold needs to have moveable plug(s) 5, the blow molding machine needs to be adapted to control the thermoforming step, and the total cycle time increases as the movement of the plug adds to the blowing cycle.

In the step shown in Fig. 3, the container is pressurized to enable a positive location of the bottle in the cavity, and the plug 5 is forced into the convex portion 9 to invert the convex portion 9 to form the desired deep gripping region 13. As the plug 5 fully engages, an over pressure of from about 1 to about 5 bar is applied inside the container to effectively act as the female mold portion of the conventional pressure-bubble/plug-assist thermoforming process. This also ensures that the non deep grip portion of the container is not deformed as the male plug 5 thermoforms the deep grip portion. Once the male plug 5 is fully engaged, plastic is conformed to the plug 5 and the final deep grip geometry is achieved. The process of inverting the convex portion (9) can be performed in a conforming mold 3 that is separate from the blow mold 1.

An acceptable integral handle can be provided by the above process by having the temperature of the convex portion (9) below the glass transition temperature Tg when deforming the convex portion 9 or each convex portion 9 by means of an inwardly moving plug 5 to form one or more concave gripping region(s) 13. Unexpectedly, the material in the convex portion (9) need not be above the glass transition temperature, Tg, to allow for the deformation from the intermediate container 8 in to the finished container 10. The temperature of the convex portion (9) can be below the glass transition temperature Tg and within about 35 °C of the glass transition temperature Tg. The temperature of the convex portion (9) can be below the glass transition temperature Tg and within about 25 °C of the glass transition temperature Tg. The temperature of the convex portion (9) can be below the glass transition temperature Tg and within about 15 °C of the glass transition temperature Tg. For PET, the material in the gripping region can have a temperature between about 50 °C and about 81 °C. In the temperature range between about 50°C and about 75°C the material stiffness of PET is greater than the material stiffness above Tg (81°C) thereby limiting large material deformations. As the plug(s) 5 forms the concave gripping region(s) the material strain and strain rate is moderate. The deformation is typically bending with no or limited extensional strain. If there is no extensional strain, no strain rate is applied. It is believed to be beneficial to have the material bending accompanied with application of a small amount of extensional strain. Extensional strain can be about 1% to about 100% or can be about 10% to about 50%. The strain rate can then be about 50 to 1000 mm/sec or can then be about 100 to 500 mm/sec.

Use of a temperature below Tg during the step of deforming the convex portion 9 or convex portions 9 can reduce the energy needed to produced the finished container, thereby lowering the cost of the container, and can increase conversion rate since time is not needed to reheat the convex portion 9 above the glass transition temperature Tg prior to deformation. Further, heating the convex portion 9 or convex portions 9 to a temperature above Tg can result in problems with material distribution in and proximal to the convex portion 9 and the deep grip region 13 resulting from inverting the convex portion 9 or convex portions 9.

In the step shown in Fig. 4, the pressure can be first released, and then the plug 5 retracted, and the bottle ejected. The finished container 10 can be ejected at a temperature below Tg, which can hinder further mechanical deformation and preserve the finished container 10 in the desired shape.

In one embodiment, the deep grip can be a mirror shape of the convex portion 9. In another embodiment, it can be of advantage if the surface area of the convex portion 9 is somewhat smaller than the surface area of the deep grip (about 1% to about 50% smaller). In the case that the surface area of the convex portion 9 is smaller than the surface area of the deep grip there is a three dimensional deformation of the convex portion 9 to form the deep grip. The resulting wall thickness reduction of the convex portion 9 to form the deep grip can be of advantage to give a good definition of the deep grip detail. Without being bound by theory, it is believed that the surface area of the convex portion 9 should not be larger than the area of the deep grip as the "excessive" surface can form folds and wrinkles that can have negative impact on aesthetics and performance. The convex portion 9 can have the shape of a bubble.

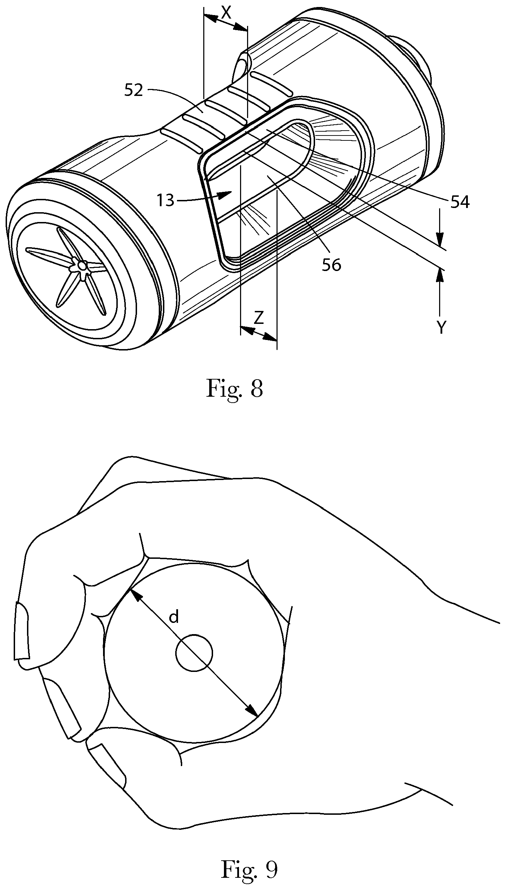

The overall deformation of the convex portion 9 to the grip in the finished container 10 can be large. The grip recess (dimension z in Figure 8) can be greater than about 10mm and typically can be greater than about 20 mm. In the case that the convex portion 9 is a mirror image of the grip of the finished container 10, the material forming the grip will move two times the grip recess distance, i.e. generally more than about 20 mm and typically more than about 40mm. Each material element however experiences only a small deformation as it rolls against the shape of the male plug that is traveling to the final position. In the case of the mirror shape convex portion 9, the deformation is a bending without or a with a limited amount extensional strain. It can be beneficial if the convex portion 9 is smaller than the surface of the final grip. In that case, the material will undergo bending and extensional strain. That extensional strain can be within about 50%, within about 10%, within about 5%, within about 1%, or within about 0.1%.

The deep grip can be ergonomically shaped to help the consumer to hold the container and pour product from the container. Anthropometric studies indicate that the minimum grip diameter of the circle formed by the thumb and forefinger when enclosing a cone (in accordance with DIN33402) for women aged 20-59 is 34 mm, which corresponds to an inside perimeter of 107 mm. Accordingly the deep grip can provide at least this amount of grippable developed length to ensure ergonomic functionality equal to that of a through handle.

Fig. 8 is a drawing of a finished container 10 with key deep grip functional dimensions: deep grip palm rest, x, 52; deep grip finger rest, y, 54; deep grip recess depth, z, 56.

Fig. 9 shows the grip diameter, d, defined as the minimum diameter of the circle made by the thumb and finger when enclosing a cone (in accordance with DIN 33402).

The deep grip can be as deep as possible, the principle limitation being the footprint of the bottle. The deep grip can have a depth no less than that required to generate a developed length of about 107 mm. In the case of a symmetrical deep grip design as shown in Fig. 8, then x + 2y + 2z can be no less than about 107mm.

The palm rest of the deep grip (x) can be sufficiently large so that bottle can rest intuitively against the palm of the hand and opens the hand sufficiently wide that fingers do not touch in the bottom of the deep grip recess. It has been found by ergonomic studies that a palm rest width of at least about 30mm (x > about 30mm) can be required to provide comfortable handling at parity with that of a through handle.

The depth of each deep grip recess (z) can be no less than about 10 mm (z > about 10mm).

Opposing deep grip halves do not need to be symmetrical in terms of depth and shape as the asymmetry can improve the ergonomic performance of the container

It can be advantageous to include venting holes in the plug(s) 5 that are designed similar to venting holes conventionally used in blow molds. When the pre-stretched bubble gets thermoformed to form the concave gripping region, the surface of the material will conform closely to the outer profile of the plug(s) 5, and the air between the convex portion (9) and the plug 5 can escape through the venting holes. Furthermore, when the plug 5 is withdrawn just prior to the container ejection, the venting holes prevent a vacuum from building up between the concave gripping region and the plug 5 that could lead to a distortion of the deep grip.

It can also be advantageous to provide means for interlocking opposing concave gripping regions against each other such as to eliminate any relative movement when gripped. An example of one such means is a peg and pin where both concave gripping regions meet. The peg and pin can be aligned and interlocked after the convex portions 9 are inverted. In one embodiment the peg and pin can be formed concavely in the convex portions 9 and then formed into their final convex shape during the step of inverting of the deep grip.

The advantages of this invention can be that formation of the final deep grip area is produced with material that is already substantially stretched to its correct ratios. This prevents the requirement of significant stretching against a cool mold wall. The plugs also only need to move against a relatively low pressure (typically less than 5 bars), greatly simplifying the mold construction. In addition as deep grip formation is not occurring in an intermediate container that has had significant intimate contact with cool mold walls but instead by low strain bending during a step subsequent from blowing the intermediate container, the material may be much less stressed on deep grip forming, resulting in lower internal stresses in the deep grip area.

### Example 1

Equipolymer® C93 PET is used in stretch-blow molding at 90-95°C a container having a convex portions. The container is transferred from blow cavity to the conforming mold 3 while the convex portion 9 is at temperature between 30 and 81°C. The conditions for the transfer are selected so that the PET material remains essentially amorphous before and during the deep grip forming step. Further, the temperature/time profile for transfer are selected to limit crystal growth beyond that which can occur during stretch blow molding. The container is pressurized in the thermoforming cavity to 1-5 bar and then the deep grip is thermoformed by use of pneumatic cylinders. The deep grip is formed at a temperature below T_{g}. A plug having a contact surface matching the final deep grip shape is used to invert the convex portion. The container is vented and then ejected at a temperature of below 61°C.

For PET it can be of advantage to heat the blow cavity up to 60°C to achieve the desired temperature of the blown container (between 30 and 81 °C) at the thermoforming step.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 nm" is intended to mean "about 40 mm". the citation of any document is not to be construed as an admission that it is prior art with respect to the present invention. To the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A process for making a container having an integral handle, comprising the steps of:
a) providing a preform (6);
b) stretch blow molding said preform (6) to form an intermediate container (8) which comprises a convex portion (9) extending outwardly from said intermediate container, said convex portion (9) having a glass transition temperature;
c) at a pressure within said intermediate container (8) above about 1 bar and with the temperature of said convex portion (9) being below said glass transition temperature, inverting said convex portion (9) with an inwardly moving plug (5) having a drive direction to form a concave gripping region (13) whereby locations on said convex portion translate in a substantially straight line path as said convex portion is inverted; and
d) releasing excess pressure within the container;
wherein said plug has a contact surface (20) having a contact surface area (21), said contact surface comprised of an initial contact surface (25) and a secondary contact surface (30) proximal said initial contact surface, said secondary contact surface oblique to said drive direction; wherein said contact surface has a contact surface periphery (35) having a projected plane area; wherein said contact surface area is greater than said projected plane area;
wherein said contact surface is substantially convex relative to said contact surface periphery; and
wherein said contact surface substantially corresponds with said concave gripping region.

2. The process according to Claim 1, wherein said convex portion is a convex bubble.

3. The process according to Claim 1 or Claim 2, wherein said convex portion has a convex portion surface area, said gripping region has a gripping region surface area, and said convex portion surface area is less than said gripping region surface area.

4. The process according to any one of the preceding claims, wherein said intermediate container comprises two convex portions.

5. The process according to any one of the preceding claims wherein step d) comprises releasing excess pressure within the container prior to withdrawing the plug from within the container.

6. The process according to any one of the preceding claims, wherein step b) is carried out in a blow molding cavity (1), and wherein step c) is carried out in a separate conforming cavity (3), and wherein said intermediate container is transferred from said blow molding cavity to said conforming cavity between these two steps.

7. The process according to any one of the preceding claims, wherein the temperature of the finished container ejected from the mold cavity at step e) is below said glass transition temperature, Tg.

8. The process according to any one of the preceding claims, wherein said container comprises two concave gripping regions interlocked against each other.

9. The process according to any one of the preceding claims, wherein said gripping region of said container comprises deep grip palm rest, x, (52); deep grip finger rest, y, (54); and deep grip recess depth, z, (56).

10. The process according to Claim 9, wherein x + 2y + 2z is greater than about 107 mm.

11. The process according to Claim 9 wherein said depth of the deep grip recess, z, is greater than about 20 mm.

12. The process according to any one of the preceding claims, wherein said locations on said convex portion translate in a substantially straight line path as said convex portion is inverted such that a particular location mapped on said convex portion travels within a variation of less than or equal to about 10 degrees as measured from an initial location of said particular location mapped on said convex portion off of a line coincident with said drive direction in a direction of said drive direction.

13. The process according to any one of Claims 1 to 11, wherein said locations on said convex portion translate in a substantially straight line path as said convex portion is inverted such that a particular location mapped on said convex portion travels within a variation of less than or equal to about 5 degrees as measured from an initial location of said particular location mapped on said convex portion off of a line coincident with said drive direction in a direction of said drive direction.

## Patentansprüche

1. Verfahren zum Herstellen eines Behälters mit einem integralen Griff, umfassend die folgenden Schritte:
a) Bereitstellen einer Vorform (6);
b) Dehnungsblasformen der Vorform (6), um einen Zwischenbehälter (8) zu bilden, der einen konvexen Abschnitt (9) umfasst, der sich von dem Zwischenbehälter nach außen erstreckt, wobei der konvexe Abschnitt (9) eine Glasübergangstemperatur aufweist;
c) Invertieren des konvexen Abschnitts (9) mit einem nach innen beweglichen Stopfen (5) mit einer Antriebsrichtung bei einem Druck innerhalb des Zwischenbehälters (8) oberhalb von etwa 1 bar und bei einer Temperatur des konvexen Abschnitts (9) unterhalb dieser Glasübergangstemperatur, um einen konkaven Greifbereich (13) zu bilden, wobei sich Stellen auf dem konvexen Abschnitt in einem im Wesentlichen geradlinigen Verlauf verschieben, wenn der konvexe Abschnitt invertiert wird; und
d) Freisetzen von Überdruck innerhalb des Behälters;
wobei der Stopfen eine Kontaktfläche (20) mit einem Kontaktflächenbereich (21) aufweist, wobei die Kontaktfläche aus einer anfänglichen Kontaktfläche (25) und einer sekundären Kontaktfläche (30), nahe gelegen der anfänglichen Kontaktfläche, besteht, wobei die sekundäre Kontaktfläche schräg zu der Antriebsrichtung steht;
wobei diese Kontaktfläche einen Kontaktflächenumfang (35) mit einer hervorstehenden ebenen Fläche aufweist;
wobei der Kontaktflächenbereich größer als die hervorstehende ebene Fläche ist;
wobei die Kontaktfläche im Wesentlichen konvex in Bezug auf den Kontaktflächenumfang ist; und
wobei die Kontaktfläche im Wesentlichen dem konkaven Greifbereich entspricht.

2. Verfahren nach Anspruch 1, wobei der konvexe Abschnitt eine konvexe Blase ist.

3. Verfahren nach Anspruch 1 oder Anspruch 2, wobei der konvexe Abschnitt einen Oberflächenbereich des konvexen Abschnitts aufweist, wobei der Greifbereich einen Oberflächenbereich des Greifbereichs aufweist und wobei der Oberflächenbereich des konvexen Abschnitts kleiner als der Oberflächenbereich des Greifbereichs ist.

4. Verfahren nach einem der vorstehenden Ansprüche, wobei der Zwischenbehälter zwei konvexe Abschnitte umfasst.

5. Verfahren nach einem der vorstehenden Ansprüche, wobei der Schritt d) Freisetzen des Überdrucks innerhalb des Behälters umfasst, bevor der Stopfen aus dem Behälter herausgezogen wird.

6. Verfahren nach einem der vorstehenden Ansprüche, wobei der Schritt b) in einem Blasformhohlraum (1) durchgeführt wird und wobei der Schritt c) in einem separaten angepassten Hohlraum (3) durchgeführt wird und wobei der Zwischenbehälter zwischen diesen beiden Schritten von dem Blasformhohlraum zu dem angepassten Hohlraum überführt wird.

7. Verfahren nach einem der vorstehenden Ansprüche, wobei die Temperatur des fertigen Behälters, der in Schritt e) aus dem Formhohlraum ausgestoßen wird, unterhalb der Glasübergangstemperatur Tg liegt.

8. Verfahren nach einem der vorstehenden Ansprüche, wobei der Behälter zwei konkave Greifbereiche umfasst, die gegeneinander verriegelt sind.

9. Verfahren nach einem der vorstehenden Ansprüche, wobei der Greifbereich des Behälters eine Tiefgriff-Handflächenauflage x (52); eine Tiefgriff-Fingerauflage y (54); und eine Tiefgriff-Aussparungstiefe z (56) umfasst.

10. Verfahren nach Anspruch 9, wobei x + 2y + 2z größer als etwa 107 mm ist.

11. Verfahren nach Anspruch 9, wobei die Tiefe der tiefen Griffaussparung z größer als etwa 20 mm ist.

12. Verfahren nach einem der vorstehenden Ansprüche, wobei sich die Stellen auf dem konvexen Abschnitt in einem im Wesentlichen geradlinigen Verlauf verschieben, wenn der konvexe Abschnitt invertiert wird, sodass eine bestimmte Stelle, die auf dem konvexen Abschnitt abgebildet ist, sich innerhalb einer Variation von kleiner oder gleich bis etwa 10 Grad, gemessen von einer anfänglichen Stelle der bestimmten Stelle, die auf dem konvexen Abschnitt abgebildet ist, von einer Linie, die mit der Antriebsrichtung übereinstimmt, in einer Richtung der Antriebsrichtung bewegt.

13. Verfahren nach einem der Ansprüche 1 bis 11, wobei sich die Stellen auf dem konvexen Abschnitt in einem im Wesentlichen geradlinigen Verlauf verschieben, wenn der konvexe Abschnitt invertiert wird, sodass eine bestimmte Stelle, die auf dem konvexen Abschnitt abgebildet ist, sich innerhalb einer Variation von kleiner oder gleich bis etwa 5 Grad, gemessen von einer anfänglichen Stelle der bestimmten Stelle, die auf dem konvexen Abschnitt abgebildet ist, von einer Linie, die mit der Antriebsrichtung übereinstimmt, in einer Richtung der Antriebsrichtung bewegt.

## Revendications

1. Procédé de fabrication d'un récipient ayant une poignée d'un seul tenant, comprenant les étapes consistant à :
a) la fourniture d'une pré-forme (6);
b) le moulage par soufflage-étirage de ladite pré-forme (6) afin de former un récipient intermédiaire (8) qui comprend une partie convexe (9) s'étendant vers l'extérieur depuis ledit récipient intermédiaire, ladite partie convexe (9) ayant une température de transition vitreuse ;
c) à une pression à l'intérieur dudit récipient intermédiaire (8) supérieure à environ 1 bar et avec la température de ladite partie convexe (9) étant inférieure à ladite température de transition vitreuse, l'inversion de ladite partie convexe (9) avec un bouchon mobile vers l'intérieur (5) ayant une direction d'entraînement afin de former une région de préhension concave (13), moyennant quoi des emplacements sur ladite partie convexe effectuent une translation dans un trajet sensiblement en ligne droite lorsque ladite partie convexe est inversée ; et
d) la libération de la pression excédentaire au sein du récipient ;
dans lequel ledit bouchon a une surface de contact (20) ayant une zone de surface de contact (21), ladite surface de contact étant constituée d'une surface de contact initial (25) et d'une surface de contact secondaire (30) à proximité de ladite surface de contact initial, ladite surface de contact secondaire étant oblique par rapport à ladite direction d'entraînement ;
dans lequel ladite surface de contact a une périphérie de surface de contact (35) ayant une zone de plan en saillie ;
dans lequel ladite zone de surface de contact est inférieure à ladite zone de plan en saillie ;
dans lequel ladite surface de contact est sensiblement convexe par rapport à ladite périphérie de surface de contact ; et
dans lequel ladite surface de contact correspond sensiblement à ladite région de préhension concave.

2. Procédé selon la revendication 1, dans lequel ladite partie convexe est une bulle convexe.

3. Procédé selon la revendication 1 ou la revendication 2, dans lequel ladite partie convexe a une zone de surface de partie convexe, ladite région de préhension a une zone de surface de région de préhension et ladite zone de surface de partie convexe est inférieure à ladite zone de surface de région de préhension.

4. Procédé selon l'une quelconque des revendications précédentes, dans lequel ledit récipient intermédiaire comprend deux parties convexes.

5. Procédé selon l'une quelconque des revendications précédentes, dans lequel l'étape d) comprend la libération de la pression excédentaire à l'intérieur du récipient avant de retirer le bouchon depuis l'intérieur du récipient.

6. Procédé selon l'une quelconque des revendications précédentes, dans lequel l'étape b) est effectuée dans une cavité de moulage par soufflage (1) et dans lequel l'étape c) est effectuée dans une cavité de conformage séparée (3) et dans lequel ledit récipient intermédiaire est transféré de ladite cavité de moulage par soufflage à ladite cavité de conformage entre ces deux étapes.

7. Procédé selon l'une quelconque des revendications précédentes, dans lequel la température du récipient fini éjecté de la cavité du moule à l'étape e) est inférieure à ladite température de transition vitreuse, Tg.

8. Procédé selon l'une quelconque des revendications précédentes, dans lequel ledit récipient comprend deux régions de préhension concaves inter-verrouillées l'une contre l'autre.

9. Procédé selon l'une quelconque des revendications précédentes, dans lequel ladite région de préhension dudit récipient comprend un repose-paume de préhension profond, x (52) ; un repose-doigts de préhension profond, y (54) ; et une profondeur d'évidement de préhension profond, z (56).

10. Procédé selon la revendication 9, dans lequel x + 2y + 2z est supérieur à environ 107 mm.

11. Procédé selon la revendication 9, dans lequel ladite profondeur de l'évidement de préhension profond, z, est supérieure à environ 20 mm.

12. Procédé selon l'une quelconque des revendications précédentes, dans lequel lesdits emplacements sur ladite partie convexe effectuent une translation dans un trajet en ligne sensiblement droite lorsque ladite partie convexe est inversée, de sorte qu'un emplacement particulier mis en correspondance sur ladite partie convexe se déplace au sein d'une variation inférieure ou égale à environ 10 degrés, telle que mesurée à partir d'un emplacement initial dudit emplacement particulier mis en correspondance sur ladite partie convexe à partir d'une ligne coïncidant avec ladite direction d'entraînement dans une direction de ladite direction d'entraînement.

13. Procédé selon l'une quelconque des revendications 1 à 11, dans lequel lesdits emplacements sur ladite partie convexe effectuent une translation dans un trajet en ligne sensiblement droite lorsque ladite partie convexe est inversée, de sorte qu'un emplacement particulier mis en correspondance sur ladite partie convexe se déplace au sein d'une variation inférieure ou égale à environ 5 degrés, telle que mesurée à partir d'un emplacement initial dudit emplacement particulier mis en correspondance sur ladite partie convexe à partir d'une ligne coïncidant avec ladite direction d'entraînement dans une direction de ladite direction d'entraînement.
